# FASCICULE DE BREVET EUROPEEN

(11) **EP 3 039 069 B1**
(45) Date de publication et mention de la délivrance du brevet: **25.07.2018**
(21) Numéro de dépôt: 14757929.6
(22) Date de dépôt: 29.08.2014
(51) Int. Cl.: C08L 15/00, B60C 1/00, C08K 5/3445, C08K 5/092

(54) **CAOUTCHOUC NATUREL ÉPOXYDÉ ET MODIFIÉ**
MODIFIZIERTER EPOXIDIERTER NATURKAUTSCHUK
MODIFIED EPOXIDISED NATURAL RUBBER

(30) Priorité: 30.08.2013 FR 1358325
(43) Date de publication de la demande: 06.07.2016
(73) Titulaire: Compagnie Générale des Etablissements Michelin, 63000 Clermont-Ferrand (FR)
(72) Inventeur: FLEURY, Etienne, F-63040 Clermont-Ferrand Cedex 09 (FR); JEAN-BAPTISTE-DIT-DOMINIQUE, François, F-63040 Clermont-Ferrand Cedex 09 (FR)
(74) Mandataire: Gandon-Pain, Sylvie
(86) Numéro de dépôt international: PCT/EP2014/068401
(87) Numéro de publication internationale: WO 2015/028620

(56) Documents cités:
- EP-A1- 1 484 359
- MYRIAM PIRE ET AL: "Imidazole-promoted acceleration of crosslinking in epoxidized natural rubber/dicarboxylic acid blends", POLYMER , vol. 52, no. 23 27 octobre 2011 (2011-10-27), pages 5243-5249, XP002698721, ELSEVIER SCIENCE PUBLISHERS B.V, GB ISSN: 0032-3861, DOI: 10.1016/J.POLYMER.2011.09.032 Extrait de l'Internet: URL:http://www.sciencedirect.com/science/a rticle/pii/S0032386111007853 [extrait le 2011-09-22]
- MYRIAM PIRE, CÉDRIC LORTHIOIR, EVDOKIA K. OIKONOMOU, SOPHIE NORVEZ, ILLIAS ILIOPOULOS, BENOIT LE ROSSIGNOL, LUDWIK LEIBLER: "Imidazole-accelerated crosslinking of epoxidzed natural rubber by dicarboxylic acids: a mechanistic investigation using NMR spectrospcopy", POLYM. CHEM., vol. 3, 31 janvier 2012 (2012-01-31), - 31 janvier 2012 (2012-01-31), pages 946-953, XP002716750,
- MYRIAM PIRE ET AL: "Epoxydized natural rubber/dicarboxylic acid self-vulcanized blends", POLYMER, vol. 51, no. 25, 26 novembre 2010 (2010-11-26), pages 5903-5909, XP002698722, ELSEVIER SCIENCE PUBLISHERS B.V, GB ISSN: 0032-3861, DOI: 10.1016/J.POLYMER.2010.10.023 [extrait le 2010-10-20]
- LUCIE IMBERNON, MYRIAM PIRE, EVDOKIA K. OIKONOMOU, SOPHIE NORVEZ: "Semi-interpenetrating Neworks in Blends of Epoxidized Natural Rubbers", MACROMOLECULAR CHEMISTRY AND PHYSICS, vol. 214, 5 février 2013 (2013-02-05), - 5 février 2013 (2013-02-05), pages 806-811, XP002716751,

## Description

La présente invention se rapporte à un procédé de modification d'un caoutchouc naturel époxydé, au caoutchouc naturel époxydé et modifié ainsi obtenu et à une composition de caoutchouc, utilisable notamment pour la fabrication de pneumatiques, à base d'au moins un caoutchouc naturel époxydé et modifié et d'une charge renforçante.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition de pneumatiques.

Le caoutchouc naturel est souvent utilisé dans le domaine pneumatique. Malgré de bonnes propriétés mécaniques, il présente une température de transition vitreuse (Tg) basse, ce qui limite la performance adhérence. Un des moyens bien connu pour résoudre de problème est d'augmenter cette Tg, par exemple en utilisant un caoutchouc naturel époxydé. En contrepartie, les propriétés d'hystérèse sont cependant généralement dégradées par cette modification.

Il est donc particulièrement intéressant d'améliorer les propriétés hystérétiques des mélanges obtenus à partir de caoutchouc naturel époxydé. Pour aboutir à cela, on recherche notamment des moyens pour améliorer la dispersion des charges au sein de matrices polymères à base de caoutchouc naturel époxydé. Parmi les moyens envisagés pour parvenir à ce résultat, il a été proposé de modifier le caoutchouc naturel époxydé pour lui greffer des fonctions capables d'améliorer des interactions entre le polymère et la charge.

Ainsi, le document EP 1 484 359 décrit une composition aux propriétés améliorées à base d'un caoutchouc naturel époxydé modifié obtenu par réaction d'un caoutchouc naturel époxydé avec un composé choisi dans le groupe constitué par un acide de Lewis, un composé d'amine, un thiol, un amide et un composé d'imidazole permettant de procéder à une ouverture de cycle d'un groupe époxy ainsi qu'une composition de caoutchouc associée.

Il est par ailleurs connu de l'homme de l'art que des acides carboxyliques peuvent ouvrir les fonctions époxydes du caoutchouc naturel époxydé et modifier le caoutchouc (voir notamment Polymer, 1989, 60, 1903). Cependant, ce mode de greffage par un acide présente généralement des rendements limités et peut s'accompagner de la formation de produits secondaires d'élimination de type alcool allylique (voir J. Appl. Polym. Sci., 2011, 121, 508).

Le document « Imidazole-promoted acceleration of crosslinking in epoxidized natural rubber/dicarboxylic acid blends », Polymer, vol. 52, no. 23, 27 octobre 2017, p.5243-5249 divulgue la réticulation d'un caoutchouc naturel époxydé au moyen d'acide dodécanedioïque en présence de 1,2-diméthylimidazole.

Le document « Imidazole-accelerated crosslinking of epoxidized natural rubber by dicarboxylic acids: a mechanistic investigation using NMR spectroscopy » Polym. Chem., vol. 3, 31 janvier 2012, p.946-953 divulgue aussi la réticulation d'un caoutchouc naturel époxydé au moyen d'acide dodécanedioïque et d'acide laurique en présence de 1,2-diméthylimidazole.

Dans ce contexte, il est intéressant de continuer à rechercher à améliorer le greffage sur un caoutchouc naturel époxydé, notamment au moyen d'un acide carboxylique.

Le but de la présente invention est donc de fournir un procédé de modification d'un caoutchouc naturel époxydé avec un rendement amélioré permettant de greffer des fonctions susceptibles de réagir avec une charge renforçante au sein d'une composition de caoutchouc.

Ce but est atteint en ce que les inventeurs ont mis en évidence un procédé de modification d'un caoutchouc naturel époxydé par addition d'un système constitué d'un acide carboxylique particulier et d'un imidazole conduisant à l'ouverture des fonctions époxydes avec un rendement significativement amélioré. En outre, ce procédé permet de limiter la formation de produits secondaires d'élimination de type alcools allyliques. Le caoutchouc naturel époxydé ainsi modifié comporte des groupements greffés le long de la chaîne susceptibles d'interagir avec une charge renforçante au sein d'une composition de caoutchouc les contenant. Un élastomère ainsi modifié confère notamment à une composition le contenant des propriétés hystérétiques améliorées.

En conséquence, un premier objet de l'invention concerne le procédé de modification d'un caoutchouc naturel époxydé par réaction d'un caoutchouc naturel époxydé avec un système constitué :
- d'un acide carboxylique de formule générale (I) suivante : 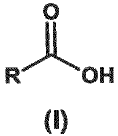 dans laquelle R représente un groupement comportant au moins une fonction choisie parmi les amines primaires, secondaire ou tertiaires, cycliques ou non, les éthers, les silanols, les alcoxysilanes, les thiols, les ammoniums, les imines, les groupements stannylés ou R représente un groupement hydrocarboné aliphatique substitué ou aromatique substitué ou non, linéaire ou ramifié, et
   et d'un imidazole de formule générale (II) suivante : 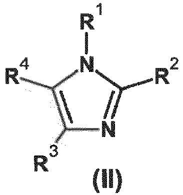 dans laquelle,
   - R¹ représente un groupement hydrocarboné ou un atome d'hydrogène,
   - R² représente un groupement hydrocarboné,
   - R³ et R⁴ représentent indépendamment l'un de l'autre, un atome d'hydrogène ou un groupement hydrocarboné,
   - ou encore R³ et R⁴ forment ensemble avec les atomes de carbone du cycle imidazole auxquels ils se rattachent, un cycle,
- puis cuisson à une température supérieure à 120°C.

L'invention porte également sur un caoutchouc naturel époxydé et modifié.

L'invention a également pour objet une composition de caoutchouc à base
- d'au moins un caoutchouc naturel époxydé et modifié selon l'invention,
- d'une ou plusieurs charges renforçantes, et
- d'un système de réticulation.

Un pneumatique comprenant une telle composition fait également l'objet de l'invention.

On entend dans la suite du texte par « taux d'agent de modification » présent dans une composition de caoutchouc, exprimé en pourcentage molaire, le nombre de molécules d'agent de modification pour cent motifs isoprèniques, qu'il s'agisse indifféremment de motifs époxydés ou non. Par exemple, si le taux d'agent de modification sur un ENR modifié est de 0,20 % molaire, cela signifie qu'il y aura 0,20 motif issu de la modification d'isoprène époxydé pour 100 motifs monomères ; sachant que par motifs monomères, il faut comprendre les motifs isopréniques époxydés ou non, ainsi que les motifs isopréniques époxydés modifiés.

On entend dans la suite du texte par « composition à base de » une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

On entend dans la suite du texte par « groupement » ou « fonction susceptible d'interagir avec une charge renforçante », tout groupement ou fonction capable de former, au sein d'une composition de caoutchouc renforcée au moyen d'une charge, une liaison physique ou chimique avec ladite charge. Cette interaction peut s'établir par exemple par le biais de liaisons covalentes, hydrogène et/ou ioniques entre les groupements greffés sur le caoutchouc naturel époxydé et des fonctions présentes sur des charges.

Dans la présente description, sauf indication expresse différente, tous les pourcentages (%) indiqués sont des % en masse.

Dans la présente description, par « majoritairement » ou « majoritaire » en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids totale de l'ensemble des charges de la composition. Dans un système comprenant un seul composé d'un certain type, celui-ci est majoritaire au sens de la présente invention.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Ainsi, le procédé de l'invention concerne un procédé de modification d'un caoutchouc naturel époxydé comprenant
- la réaction mise en contact d'un caoutchouc naturel époxydé avec un système constitué d'un acide carboxylique de formule générale (I) suivante : 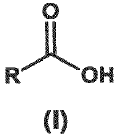
   dans laquelle R représente un groupement comportant au moins une fonction choisie parmi les amines primaires, secondaire ou tertiaires, cycliques ou non, les éthers, les silanols, les alcoxysilanes, les thiols, les ammoniums, les imines, les groupements stannylés ou R représente un groupement hydrocarboné aliphatique substitué ou aromatique substitué ou non, linéaire ou ramifié, et
   et d'un imidazole de formule générale (II) suivante : 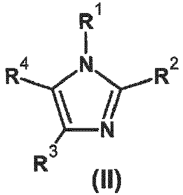 dans laquelle,
      - R¹ représente un groupement hydrocarboné ou un atome d'hydrogène,
      - R² représente un groupement hydrocarboné,
      - R³ et R⁴ représentent indépendamment l'un de l'autre, un atome d'hydrogène ou un groupement hydrocarboné,
      - ou encore R³ et R⁴ forment ensemble avec les atomes de carbone du cycle imidazole auxquels ils se rattachent, un cycle;
- puis la cuisson à une température supérieure à 120°C.

Les caoutchoucs naturels époxydés (ENR) peuvent être obtenus, comme connu en soi, par époxydation des caoutchoucs naturels, par exemple par des procédés à base de chlorohydrine ou de bromohydrine, des procédés d'oxydation directe ou des procédés à base de peroxydes d'hydrogène, d'alkyl hydroperoxides ou de peracides (tel que l'acide peracétique ou l'acide performique).

L'époxydation peut être réalisée sur un latex de caoutchouc naturel ou sur un caoutchouc naturel sec. Selon une variante de l'invention, l'époxydation est réalisée sur un latex de caoutchouc naturel pour former un latex époxydé, qui peut ensuite être séché.

Le latex de caoutchouc naturel (NR) existe sous différentes formes comme le détaille le chapitre 3 « Latex concentrates : properties and composition », de K.F. Gaseley, A.D.T. Gordon et T.D. Pendle dans « Naturel Rubber Science and Technology », A.D. Roberts, Oxford University Press - 20 1988. En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » (low ammonia) ; on utilisera avantageusement pour l'invention des latex de caoutchouc naturel concentrés de qualité HA. Le latex peut être utilisé directement ou être préalablement dilué dans de l'eau pour faciliter sa mise en oeuvre.

Les caoutchoucs naturels époxydés (ENR) sont également disponibles commercialement.

Le taux d'époxydation (% en mole) du caoutchouc naturel époxydé utilisé en tant que réactif de la réaction de modification est dans un domaine allant de 1 à 50%mol, préférentiellement au moins 2%mol, voire au moins 5%mol.

Selon l'invention, le caoutchouc naturel époxydé est modifié par un agent de modification.

L'agent de modification est le système constitué d'un acide carboxylique de formule générale (I) et d'un imidazole de formule générale (II).

L'acide carboxylique utile pour les besoins de l'invention est un acide carboxylique de formule générale (I) suivante : 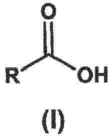 dans laquelle le groupe R représente un groupement comportant au moins une fonction choisie parmi les amines primaires, secondaire ou tertiaires, cycliques ou non, les éthers, les silanols, les alcoxysilanes, les thiols, les ammoniums, les imines, les groupements stannylés ou R représente un groupement hydrocarboné aliphatique substitué ou aromatique substitué ou non, linéaire ou ramifié.

Un acide carboxylique de formule générale (I) comportant un groupement azoté peut être par exemple, un acide aminé naturel ou synthétique (arginine, leucine, isoleucine, cystine, proline...etc.), l'acide 4-aminobenzoïque, l'acide 4-diméthylaminobenzoïque, l'acide 2-méthylpyridine-4-carboxylique, l'acide (S)-(+)-pyrrolidine-3-carboxylique, le 2-{4-[di(2-chloroéthyl)amino]phényl}acétique.

Un acide carboxylique de formule générale (I) comportant un groupement oxygéné peut être par exemple l'acide tétrahydropyran-2-carboxylique, l'acide tétrahydrofurane-2-carboxylique.

Selon d'autres variantes encore, le groupe R de l'acide carboxylique de formule générale (I) représente un groupement hydrocarboné aliphatique substitué ou aromatique, substitué ou non, linéaire ou ramifié, tel qu'un radical alkyle en C₁-C₁₀₀, préférentiellement C₁-C₃₀, cycloalkyle en C₃-C₁₀, aryle en C₆-C₁₆, aralkyle en C₇-C₃₀.

Selon un mode de réalisation préférentiel de ces autres variantes, le groupe R de l'acide carboxylique de formule générale (I) représente un groupement choisi parmi :
- les groupements hydrocarbonés alkyles linéaires et substitués,
- les groupements hydrocarbonés alkyles ramifiés, substitués ou non substitués,
- les groupements hydrocarbonés cycloalkyles ramifiés ou non, substitués ou non substitués,
- les groupements hydrocarbonés aryles, substitués ou non substitués et
- les groupements aralkyls, pour lesquels la chaine alkyle est linéaire ou ramifiée, substituée ou non-substituée et le groupement aryle est substitué ou non substitué.

Selon un mode de réalisation encore plus préférentiel de ces autres variantes, le groupe R représente un groupement choisi parmi :
- les groupements hydrocarbonés alkyles ramifiés,
- les groupements hydrocarbonés cycloalkyles ramifiés ou non,
- les groupements hydrocarbonés aryles, et
- les groupements aralkyls pour lesquels la chaine alkyle est linéaire ou ramifiée.

A titre d'acide carboxylique, dont le groupe R est un radical aralkyle, on peut citer l'acide hydrocinnamique.

A titre d'acide carboxylique, dont le groupe R est un radical aryle, on peut citer l'acide fluorène-9-carboxylique, l'acide biphényl-4-carboxylique, l'acide 1-naphthoïque.

Le taux d'acide utilisé dans le procédé est préférentiellement compris dans un domaine allant de 0,1 à 100 parties en poids pour cent parties en poids de caoutchouc naturel époxydé, préférentiellement au moins de 0,5 parties en poids, et au plus 60 parties en poids, plus préférentiellement au plus de 40 parties en poids, et plus préférentiellement encore au plus de 20 parties en poids. En dessous de 0,1 parties en poids d'acide, l'effet de la modification n'est pas sensible, tandis qu'au delà de 100 parties en poids, la chaîne élastomère du caoutchouc naturel époxydé n'est plus majoritaire et ne pilote plus les propriétés du matériau. Les acides utiles pour les besoins de l'invention sont soit disponibles dans le commerce, soit facilement préparés par l'homme de l'art selon des techniques bien connues.

L'imidazole utile pour les besoins de l'invention est un imidazole de formule générale (II) suivante : 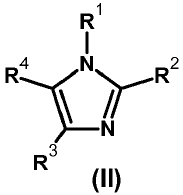 dans laquelle,
- R¹ représente un groupement hydrocarboné ou un atome d'hydrogène,
- R² représente un groupement hydrocarboné,
- R³ et R⁴ représentent indépendamment l'un de l'autre, un atome d'hydrogène ou un groupement hydrocarboné, ou encore R³ et R⁴ forment ensemble avec les atomes de carbone du cycle imidazole auxquels ils se rattachent, un cycle.

De préférence, l'imidazole de formule générale (II) possèdent des groupements tels que :
- R¹ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être substitué et/ou interrompu par un ou plusieurs hétéroatomes,
- R² représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être substitué et/ou interrompu par un ou plusieurs hétéroatomes,
- R³ et R⁴ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être substitués et/ou interrompus par des hétéroatomes, ou encore R³ et R⁴ forment ensemble avec les atomes de carbone du cycle imidazole auxquels ils se rattachent, un cycle choisi parmi les cycles aromatiques ayant de 6 à 30 atomes de carbone hydrocarboné ou comprenant au moins un hétéroatome choisi parmi l'azote ou l'oxygène, ou aliphatiques, comprenant de 5 à 12 atomes de carbone, de préférence 5 ou 6 atomes de carbone.

Préférentiellement, R¹ représente un groupement choisis parmi les groupements alkyles ayant de 2 à 12 atomes de carbone, ou aralkyles ayant de 7 à 13 atomes de carbone; groupements qui peuvent éventuellement être substitués.

Préférentiellement, R² représente un groupement choisis parmi les groupements alkyles ayant de 2 à 12 atomes de carbone, groupements qui peuvent éventuellement être substitués.

De préférence, R³ et R⁴ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Alternativement et préférentiellement également, R³ et R⁴ forment avec les atomes de carbone du cycle imidazole auxquels ils se rattachent, un cycle phényle, cyclohexène, ou cyclopentène.

Plus préférentiellement, R¹ représente un groupement aralkyle ayant de 7 à 13 atomes de carbone éventuellement substitué et R² représente un groupement alkyle ayant de 1 à 12 atomes de carbone. Encore plus préférentiellement, R¹ représente un groupement aralkyle ayant de 7 à 9 atomes de carbone éventuellement substitué et R² représente un groupement alkyle ayant de 1 à 4 atomes de carbone.

Le taux d'imidazole est préférentiellement compris dans un domaine allant de 0,5 à 4 équivalents molaires, et de préférence au plus 3 équivalents molaires, par rapport à l'acide carboxylique de formule générale (I). En dessous de 0,5 équivalents molaires, on n'observe pas d'effet du co-agent imidazole par rapport à la situation où l'acide est utilisé seul, tandis qu'au-dessus d'une valeur de 4 équivalents molaires, on n'observe pas de bénéfice supplémentaire par rapport à des taux plus faibles. Ainsi, le taux d'imidazole est plus préférentiellement d'au plus 2,5 équivalents molaires, voire d'au plus 2 équivalents molaires, et de manière encore plus préférentielle d'au plus 1,5 équivalents molaires par rapport à l'acide carboxylique de formule générale (I).

Les imidazoles utiles pour les besoins de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

La modification du caoutchouc époxydé et modifié se fait selon l'invention par réaction dudit élastomère avec le système de modification décrit plus haut. L'utilisation de ce système particulier permet de limiter les réactions secondaires classiquement observées et connues par l'homme de l'art, tout en améliorant le rendement de greffage. L'incorporation de l'agent de modification peut être réalisée en masse, par exemple dans un mélangeur interne ou un mélangeur externe tel qu'un mélangeur à cylindres, ou en phase latex et/ou solvant.

De préférence, l'agent de modification est ajouté au caoutchouc époxydé en masse dans un mélangeur interne.

Selon l'invention, la réaction de modification se produit lors d'une étape de cuisson à une température supérieure à 120°C, de préférence allant de 150 à 200°C, par exemple sous presse, en étuve dans une extrudeuse ou encore dans un mélangeur interne.

Le procédé de l'invention ainsi décrit permet de préparer un caoutchouc naturel époxydé et modifié avec un meilleur rendement qu'avec un procédé ne faisant intervenir que l'acide à titre d'agent de modification.

L'invention porte sur le caoutchouc naturel époxydé et modifié obtenu par le procédé tel que défini ci-dessus.

L'invention porte également sur un caoutchouc naturel époxydé et modifié susceptible d'être obtenu par le procédé tel que défini ci-dessus.

Ce caoutchouc comprend, distribuées statistiquement ou non au sein de l'élastomère, des unités des catégories A, B et C suivantes :
A) 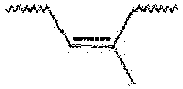 selon une fraction molaire de n %
B) 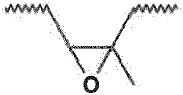 selon une fraction molaire de m %
C) 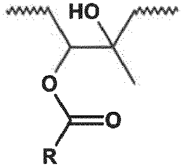 selon une fraction molaire de q %
la fraction molaire de chaque unité étant définie par rapport à la totalité de l'élastomère, soit m+n+q = 100 avec
m, n et q sont des nombres appartenant à l'intervalle allant de 0 à 100.
m+q vaut de 1 à 50, de préférence au moins 2 voire au moins 5;
q vaut de 0,05 à 50, de préférence au moins 0,1 et au plus 25, voire au plus 10, voire au plus 5 ;
R représente un groupement tel que défini plus haut.

De préférence, l'acide greffé sur le caoutchouc naturel époxydé est choisi parmi un acide aminé naturel ou synthétique, tel que ceux définis ci-dessus, l'acide 4-aminobenzoïque, l'acide 4-diméthylaminobenzoïque, l'acide 2-méthylpyridine-4-carboxylique, l'acide (S)-(+)-pyrrolidine-3-carboxylique, le 2-{4-[di(2-chloroéthyl)amino]phényl}acétique, l'acide tétrahydropyran-2-carboxylique, l'acide tétrahydrofurane-2-carboxylique, le polyamide 6 l'acide hydrocinnamique, l'acide fluorène-9-carboxylique, l'acide biphényl-4-carboxylique, l'acide 1-naphthoïque.

De préférence, l'acide hydrocinnamique est l'acide greffé.

Le caoutchouc naturel époxydé et modifié de l'invention est particulièrement adapté pour être utilisé en composition de caoutchouc renforcée destinée à la fabrication de pneumatique. En effet, la présence sur l'élastomère de groupements époxydes et de groupements susceptibles d'interagir avec une charge renforçante est connue pour contribuer à l'amélioration des performances du pneumatique notamment les performances adhérence et de résistance au roulement.

Aussi un autre objet de l'invention est-il une composition de caoutchouc à base
- d'au moins un caoutchouc naturel époxydé et modifié tel que décrit plus haut,
- d'une ou plusieurs charges renforçantes et
- d'un système de réticulation.

Le caoutchouc naturel époxydé et modifié peut être constitué, selon l'invention, d'un mélange de plusieurs caoutchoucs naturels époxydés et modifiés conformes à l'invention.

Selon des variantes de l'invention, la matrice élastomère peut également, outre le caoutchouc naturel époxydé et modifié, comprendre au moins un élastomère diénique.

Ce ou ces autres élastomères diéniques sont alors présents dans la matrice dans des proportions comprise entre 0 et 60 pce (les bornes de ce domaine étant exclues), préférentiellement au plus 50 pce, encore plus préférentiellement au plus 30 pce. Dans le cas d'un coupage avec au moins un autre élastomère diénique, la fraction massique du caoutchouc naturel époxydé et modifié dans la matrice élastomère est majoritaire et de préférence de plus de 40 pce; plus préférentiellement encore le taux de caoutchouc naturel époxydé et modifié est d'au moins 50 pce, en particulier d'au moins 70 pce.

Par élastomère diénique, doit être compris selon l'invention tout élastomère synthétique issu au moins en partie de monomères diéniques. Plus particulièrement, par élastomère diénique, on entend tout homopolymère obtenu par polymérisation d'un diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en masse d'unités diéniques, et de 1 à 80 % en masse d'unités vinylaromatiques. L'élastomère diénique constituant une partie de la matrice élastomère selon l'invention est choisi préférentiellement dans le groupe des élastomères diéniques fortement insaturés constitué par les polybutadiènes (BR), les copolymères de butadiène, les polyisoprènes (PI), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

L'élastomère diénique constituant une partie de la matrice élastomère selon l'invention peut être étoilé, couplé, fonctionnalisé ou non, de manière connue en soi, au moyen d'agents de fonctionnalisation, de couplage ou d'étoilage connus de l'homme de l'art.

Selon l'invention, la matrice élastomère de la composition est majoritairement à base de caoutchouc naturel époxydé et modifié. Dans certains cas, la matrice élastomère peut avantageusement être entièrement constituée de caoutchouc naturel époxydé et modifié (100 % de la matrice élastomère est constituée de caoutchouc naturel époxydé et modifié).

La composition de caoutchouc conforme à l'invention a pour autre caractéristique essentielle de comprendre une charge renforçante par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple demandes WO 97/36724 ou WO 99/16600).

Comme charge inorganique renforçante autre que du noir de carbone, doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques ; une telle charge se caractérise généralement, de manière connue, par la présence de groupes hydroxyles (-OH) à sa surface.

L'état physique sous lequel se présente la charge renforçante est indifférent, que ce soit sous forme de poudre, de microperles, de granulés, de billes ou toute autre forme densifiée appropriée. Bien entendu on entend également par charge renforçante des mélanges de différentes charges renforçantes, en particulier de charges siliceuses et/ou alumineuses hautement dispersibles telles que décrites ci-après.

Comme charges inorganiques renforçantes autre que du noir de carbone conviennent notamment des charges minérales du type siliceuse, en particulier de la silice (SiO₂), ou du type alumineuse, en particulier de l'alumine (Al₂O₃).

Selon une variante de l'invention, la charge renforçante est majoritairement constituée de noir de carbone, de préférence elle comprend au moins 50 % en poids du poids total de la charge, de noir de carbone.

Selon cette variante la charge renforçante peut être constituée à 100 % en poids de noir de carbone. Si la charge renforçante comprend moins de 100 % en poids de noir de carbone, le complément de charge est apporté par au moins une autre charge renforçante, notamment la silice.

Selon une autre variante de l'invention, la charge renforçante est majoritairement autre que du noir de carbone, c'est-à-dire qu'elle comprend préférentiellement plus de 50 % en poids du poids total de la charge, d'une ou de plusieurs charges autres que du noir de carbone, notamment une charge inorganique renforçante telle que la silice, voire elle est exclusivement constituée d'une telle charge.

Selon cette autre variante, lorsque du noir de carbone est également présent, il peut être utilisé à un taux inférieur à 20 pce, plus préférentiellement inférieur à 10 pce (par exemple entre 0,5 et 20 pce, notamment entre 2 et 10 pce).

De manière préférentielle, le taux de charge renforçante totale (noir de carbone et/ou autre charge renforçante telle que la silice) est compris entre 10 et 200 pce, plus préférentiellement entre 30 et 150 pce, l'optimum étant de manière connue différent selon les applications particulières visées.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Dans les compositions de caoutchouc comprises dans le pneumatique selon l'invention, la teneur en agent de couplage est préférentiellement comprise entre 0,5 et 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge ; il est typiquement de l'ordre de 0,5 % à 15 % en poids par rapport à la quantité de charge inorganique renforçante autre que du noir de carbone.

L'homme du métier comprendra qu'à titre de charge équivalente de la charge inorganique renforçante autre que noir de carbone décrite dans le présent paragraphe, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition selon l'invention peut également contenir, en complément des agents de couplage, des activateurs de couplage de la charge renforçante ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru.

Les compositions comprennent également un système de réticulation. Cette réticulation permet la formation de liaisons covalentes entre les chaînes d'élastomères. Elle peut se faire à base soit de soufre, soit de donneurs de soufre et/ou de peroxyde et/ou de bismaléimides, des accélérateurs de vulcanisation, des activateurs de vulcanisation.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2-benzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI ») et les mélanges de ces composés.

Le soufre est utilisé à un taux préférentiel compris entre 0,5 et 10 pce. L'ensemble des accélérateurs primaires, secondaires et activateurs de vulcanisation est utilisé à un taux préférentiel compris entre 0,5 et 10 pce.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30°C, telles que décrites par exemple dans les demandes WO 2005/087859, WO 2006/061064 et WO 2007/017060, et les mélanges de tels composés.

Un autre objet de l'invention est le procédé de préparation de la composition de caoutchouc décrite ci-dessus.

La composition de caoutchouc selon l'invention est fabriquée dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 130°C et 200°C, de préférence entre 145°C et 185°C, suivie d'une seconde phase de travail mécanique (parfois qualifiée de phase « productive ») à plus basse température, typiquement inférieure à 120°C, par exemple entre 60°C et 100°C, phase de finition au cours de laquelle est incorporé le système de réticulation chimique.

De manière générale, tous les constituants de base de la composition comprise dans le pneumatique de l'invention, à l'exception du système de réticulation chimique, à savoir la ou les charges renforçantes, l'agent de couplage le cas échéant, sont incorporés de manière intime, par malaxage, au caoutchouc naturel époxydé et modifié ou aux élastomères diéniques le cas échéant, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon l'invention, l'élastomère diénique, c'est-à-dire le caoutchouc naturel époxydé a été greffé par l'agent de modification préalablement à la fabrication de la composition de caoutchouc. Ainsi, c'est l'élastomère diénique époxydé modifié qui est introduit au cours de la première phase dite non-productive.

Ainsi selon ce mode de réalisation du procédé, celui-ci comprend les étapes suivantes:
- incorporer au caoutchouc naturel époxydé et modifié par greffage de l'agent de modification, la charge renforçante et tous les constituants de base de la composition, à l'exception du système de réticulation, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite le système de réticulation chimique,
- malaxer le tout jusqu'à une température maximale inférieure à 120°C,
- extruder ou calandrer la composition de caoutchouc ainsi obtenue.

L'invention a également pour objet un produit fini ou semi-fini en caoutchouc comprenant une composition de caoutchouc renforcée selon l'invention, plus particulièrement un produit fini ou semi-fini en caoutchouc pour pneumatique.

L'invention a également pour objet un pneumatique qui incorpore dans au moins un de ses éléments constitutifs une composition de caoutchouc renforcée selon l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES DE REALISATION

### I. Mesures et tests utilisés

Les élastomères et compositions de caoutchouc sont caractérisés, avant et après cuisson, comme indiqué ci-après.

### Détermination du taux d'agent de modification

La détermination du taux d'acide greffé est réalisée par une analyse RMN. Les spectres sont acquis sur un spectromètre Avance 500 MHz BRUKER équipé d'une sonde « large bande » BBIz-grad 5 mm pour les échantillons solubles et sur un spectromètre Avance 500MHz BRUKER équipé d'une sonde HRMAS 4mm ¹H/¹³C pour les échantillons insolubles. L'expérience RMN ¹H quantitative, utilise une séquence simple impulsion 30° et un délai de répétition de 5 secondes entre chaque acquisition. 256 accumulations sont réalisées. Les échantillons (environ 25mg) sont solubilisés dans le chloroforme deutéré (environ 1 ml), avec lavage de celui-ci pour éliminer l'excès d'agent de modification n'ayant pas réagi.

Le spectre RMN ¹H permet de quantifier les motifs « acide hydrocinnamique » greffés par intégration des massifs de signaux caractéristiques des protons CHO, CH₂-aro et aromatiques qui apparaissent sous forme de massifs à des déplacements chimiques respectifs de 4.7 ppm, 2.9 ppm et 7.2 ppm. Les motifs éthyléniques et les motifs époxydés de l'ENR sont quantifiés par intégration des massifs des signaux caractéristiques des protons CH du polyisoprène 1-4 à 5.1 ppm et CHO de l'époxyde à 2.6 ppm.

Le spectre de corrélation RMN 2D ¹H/¹³C 1J HSQC édité permet de vérifier la nature du motif greffé grâce aux déplacements chimiques des atomes de carbones et de protons.

Les déplacements chimiques sont calibrés par rapport à l'impureté protonée du chloroforme δppm ¹H à 7.20 ppm référencé sur le TMS (δppm ¹H à 0 ppm) et δppm ¹³C à 77 ppm référencé sur le TMS (δppm ¹³C à 0 ppm).

### II. Exemples de préparation de caoutchoucs naturels époxydés et modifiés- 1ere série

### II-1. Préparation du caoutchouc comparatif 1

Le caoutchouc 1 est un caoutchouc naturel époxydé non modifié.

Dans un tricol muni d'un barreau aimanté, et surmonté d'un réfrigérant et d'une ampoule de coulée, le latex de caoutchouc naturel initial (HANR, DRC = 61,5 %, 200 g de NR sec) est dilué afin d'atteindre un DRC de 30 % et stabilisé par l'addition de Brij35® (6 g).

Parallèlement, la quantité désirée d'acide peracétique à 39 % dans l'acide acétique ([CH₃COOOH]/[motif de polyisoprène] = 0,028, 14 mL) est additionné à 28 mL d'une solution aqueuse d' acétate de sodium ([CH₃COOOH]/[CH₃COONa] = 2, 3.4 g). Cette solution diluée d'acide peracétique est ensuite ajoutée, goutte à goutte sur une période de 35 min, au milieu réactionnel maintenu sous agitation à température ambiante. L'agitation est maintenue pendant 10 min afin que le milieu refroidisse. Enfin, une solution aqueuse de soude à 30 % massique est additionnée ([CH₃COOOH]/[NaOH] = 0,4), goutte a goutte, sur une période de 5 min et l'agitation est maintenue pendant 5 min. Le mélange réactionnel est coagulé au méthanol et le coagulum est lavé à l'eau deux fois puis séché sous vide à 60°C pendant 48h.

Le taux d'époxydation est déterminé par analyses RMN ¹H (2,0 +/- 0,2 %). Ce lot possède un taux d'azote de 0,14 %, et une Tg de - 63,5°C.

Il subit une cuisson sous presse à 180°C pendant 90 minutes pour pouvoir être comparé avec le caoutchouc comparatif 2 (voir ci-dessous).

### II-2. Préparation du caoutchouc comparatif 2

Le caoutchouc 2 est un caoutchouc naturel époxydé modifié de manière non conforme à l'invention.

Il est préparé selon le procédé décrit précédemment. Toutefois, à la différence du caoutchouc 1, à l'issue de sa préparation, on ajoute 2 % mol d'acide hydrocinnamique au caoutchouc sur outil à cylindre. Le mélange subit une cuisson sous presse à 180°C pendant 90 minutes.

### II-3. Préparation du caoutchouc selon l'invention 3

Le caoutchouc 3 est un caoutchouc naturel époxydé modifié selon l'invention. Il est préparé selon le procédé décrit précédemment. Toutefois, à la différence du caoutchouc 1, à l'issue de sa préparation on ajoute 2 % mol. d'acide hydrocinnamique et 1 équivalent molaire de 1,2-diméthylimidazole (DMI) au caoutchouc sur outil à cylindre. Le mélange subit une cuisson sous presse à 180°C pendant 90 minutes.

Les caoutchoucs précités se caractérisent par les pourcentages molaires des différents produits ci-dessous.

**Tableau 1**

| Echantil lon caoutch ouc | %mol époxydes | %mol élimination sous forme alcool allylique | %mol greffé |
|---|---|---|---|
| | 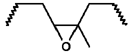 | 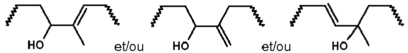 | 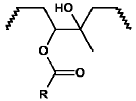 |
| ENR initial | 2,0 | - | - |
| 1 compara tif | 1,9 | traces | - |
| 2 Compar atif | 1,0 | 0,7 | 0,2 |
| 3 Invention | 1,1 | 0,2 | 0,7 |

De façon étonnante, il a été montré (tableau 1) que le rendement de greffage est amélioré en présence de DMI et que les réactions parasites d'élimination sont minimisées.

### III. Exemples de préparation de caoutchouc naturels époxydés et modifiés- 2eme série

### III-1. Préparation du caoutchouc 4 comparatif

Le caoutchouc 4 est un caoutchouc naturel époxydé à 25 % molaire (ENR25) commercial de la société Guthrie Polymer. A cet ENR25 est ajouté 1%mol d'acide hydrocinnamique sur outil à cylindre. Le mélange subit une cuisson sous presse à 180°C pendant 90 minutes.

### III-2. Préparation du caoutchouc 5 selon l'invention

Le caoutchouc 5 est le même ENR25 commercial de la société Guthrie Polymer. A cet ENR25 sont ajoutés à l'outil à cylindre 1%mol d'acide hydrocinnamique et 1 équivalent molaire de 1-benzyl-2-méthylimidazole par rapport à l'acide hydrocinnamique. Le mélange subit une cuisson sous presse à 180°C pendant 90 minutes.

Les caoutchoucs précités se caractérisent par les pourcentages molaires ci-dessous.

**Tableau 2**

| Echantillon | Taux d'époxydes (%mol) | Taux d'acide greffé (%mol) | Rdt (%) |
|---|---|---|---|
| | 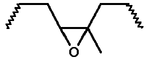 | 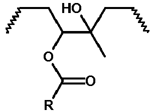 | |
| ENR25 initial | 25 | - | - |
| 4 comparatif | 24 | 0.77 | 77 |
| 5 invention | 24 | 0.89 | 89 |

On constate que la présence de 1-benzyl-2-méthylimidazole permet une amélioration notable du rendement de greffage.

## Revendications

1. Procédé de modification d'un caoutchouc naturel époxydé comprenant:
- la réaction d'un caoutchouc naturel époxydé avec un système constitué
- d'un acide carboxylique de formule générale (I) 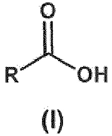 dans laquelle R représente un groupement comportant au moins une fonction choisie parmi les amines primaires, secondaires ou tertiaires, cycliques ou non, les éthers, les silanols, les alcoxysilanes, les thiols, les ammoniums, les imines, les groupements stannylés ou R représente un groupement hydrocarboné aliphatique substitué ou aromatique substitué ou non, linéaire ou ramifié, et
- d'un imidazole de formule générale (II) 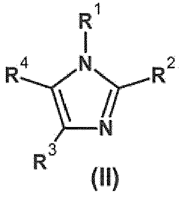 dans laquelle,
- R¹ représente un groupement hydrocarboné ou un atome d'hydrogène,
- R² représente un groupement hydrocarboné,
- R³ et R⁴ représentent indépendamment l'un de l'autre, un atome d'hydrogène ou un groupement hydrocarboné,
- ou encore R³ et R⁴ forment ensemble avec les atomes de carbone du cycle imidazole auxquels ils se rattachent, un cycle,
- puis la cuisson à une température supérieure à 120°C.

2. Procédé selon la revendication 1, **caractérisé en ce que** l'acide carboxylique de formule générale (I) est un acide aminé naturel ou synthétique, l'acide 4-aminobenzoïque, l'acide 4-diméthylaminobenzoïque, l'acide 2-méthylpyridine-4-carboxylique, l'acide (S)-(+)-pyrrolidine-3-carboxylique, le 2-{4-[di(2-chloroéthyl)amino]phényl}acétique ou l'acide carboxylique de formule générale (I) est choisi parmi l'acide tétrahydropyran-2-carboxylique et l'acide tétrahydrofurane-2-carboxylique.

3. Procédé selon la revendication 1, **caractérisé en ce que** dans la formule générale (I) le groupe R représente un groupement choisi parmi :
- les groupements hydrocarbonés alkyles linéaires et substitués,
- les groupements hydrocarbonés alkyles ramifiés, substitués ou non substitués,
- les groupements hydrocarbonés cycloalkyles ramifiés ou non, substitués ou non substitués,
- les groupements hydrocarbonés aryles, substitués ou non substitués et
- les groupements aralkyls pour lesquels la chaine alkyle est linéaire ou ramifiée, substituée ou nonsubstituée et le groupement aryle est substitué ou non substitué, et de préférence R représente un groupement choisi parmi :
- les groupements hydrocarbonés alkyles ramifiés,
- les groupements hydrocarbonés cycloalkyles ramifiés ou non,
- les groupements hydrocarbonés aryles, et
- les groupements aralkyls pour lesquels la chaine alkyle est linéaire ou ramifiée.

4. Procédé selon la revendication 1 ou 3, **caractérisé en ce que** l'acide carboxylique de formule générale (I) est l'acide stéarique, l'acide hydrocinnamique, l'acide fluorène-9-carboxylique, l'acide biphényl-4-carboxylique ou l'acide 1-naphthoïque, et de préférence
l'acide carboxylique de formule générale (I) est l'acide hydrocinnamique, l'acide fluorène-9-carboxylique, l'acide biphényl-4-carboxylique ou l'acide 1-naphthoïque.

5. Procédé selon l'une quelconque des revendications 1 à 4, **caractérisé en ce que** l'acide carboxylique de formule générale (I) est utilisé selon un taux allant de 0,1 à 100 parties en poids pour cent partie en poids de caoutchouc naturel époxydé, de préférence au moins de 0,5 parties en poids et au plus 60 parties en poids, plus préférentiellement au plus de 40 parties en poids et plus préférentiellement encore au plus de 20 parties en poids.

6. Procédé selon l'une quelconque des revendications 1 à 5, **caractérisé en ce que** dans la formule générale (II), R¹ représente un groupement choisis parmi les groupements alkyles ayant de 2 à 12 atomes de carbone, ou aralkyles ayant de 7 à 13 atomes de carbone; groupements qui peuvent éventuellement être substitués.

7. Procédé selon l'une quelconque des revendications 1 à 6, **caractérisé en ce que** dans la formule générale (II), R² représente un groupement choisis parmi les groupements alkyles ayant de 2 à 12 atomes de carbone.

8. Procédé selon l'une quelconque des revendications 1 à 7, **caractérisé en ce que** dans la formule générale (II), R³ et R⁴ forment avec les atomes de carbone du cycle imidazole auxquels ils se rattachent, un cycle phényle, cyclohexène, ou cyclopentène.

9. Procédé selon l'une quelconque des revendications 1 à 8, **caractérisé en ce que** l'imidazole de formule générale (II) est utilisé selon un taux allant de 0,5 à 4 équivalents molaires, et de préférence au plus 3 équivalents molaires, par rapport à l'acide carboxylique de formule générale (I).

10. Procédé selon l'une quelconque des revendications 1 à 9, **caractérisé en ce que** le taux d'époxydation du caoutchouc naturel époxydé utilisé en tant que réactif de la réaction de modification va de 1 à 50 % en moles.

11. Caoutchouc naturel époxydé et modifié comprenant, distribuées statistiquement au sein de l'élastomère, des unités des catégories A, B et C suivantes :
A) 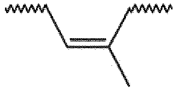 selon une fraction molaire de n %
B) 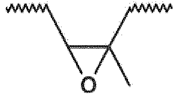 selon une fraction molaire de m %
C) 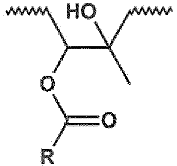 selon une fraction molaire de q %,
la fraction molaire de chaque unité étant définie par rapport à la totalité de l'élastomère, soit m+n+q = 100 avec
m, n et q sont des nombres appartenant à l'intervalle allant de 0 à 100.
m+q vaut de 1 à 50, de préférence au moins 2 voire au moins 5; q vaut de 0,05 à 50, de préférence au moins 0,1 et au plus 25, voire au plus 10, voire au plus 5;
R représente un groupement comportant au moins une fonction choisie parmi les amines primaires, secondaires ou tertiaires, cycliques ou non, les éthers, les silanols, les alcoxysilanes, les thiols, les ammoniums, les imines, les groupements stannylés ou R représente un groupement hydrocarboné aliphatique substitué ou aromatique substitué ou non, linéaire ou ramifié.

12. Caoutchouc naturel époxydé et modifié selon la revendication 11, **caractérisé en ce que** le groupe R du motif C provient d'un acide choisi parmi un acide aminé naturel ou synthétique, de préférence, l'acide 4-aminobenzoïque, l'acide 4-diméthylaminobenzoïque, l'acide 2-méthylpyridine-4-carboxylique, l'acide (S)-(+)-pyrrolidine-3-carboxylique, le 2-{4-[di(2-chloroéthyl)amino]phényl}acétique, l'acide tétrahydropyran-2-carboxylique, l'acide tétrahydrofurane-2-carboxylique, le polyamide 6 l'acide hydrocinnamique, l'acide fluorène-9-carboxylique, l'acide biphényl-4-carboxylique, l'acide 1-naphthoïque, et de préférence le groupe R du motif C provient de l'acide hydrocinnamique.

13. Composition de caoutchouc à base
- d'au moins un caoutchouc naturel époxydé et modifié tel que défini dans la revendication 11 ou 12 ou obtenu selon l'une quelconque des revendications 1 à 10, et
- d'une ou plusieurs charges renforçantes et
- d'un système de réticulation.

14. Produit fini ou semi-fini en caoutchouc, **caractérisé en ce qu'**il comprend une composition de caoutchouc telle que définie à la revendication 13.

15. Pneumatique, **caractérisé en ce qu'**il comporte un produit fini ou semi-fini tel que défini à la revendication 14.

## Patentansprüche

1. Verfahren zum Modifizieren eines epoxidierten Naturkautschuks, umfassend:
- Umsetzen eines epoxidierten Naturkautschuks mit einem System, bestehend aus:
- einer Carbonsäure mit der allgemeinen Formel (I) : 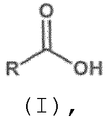 wobei R eine Gruppe darstellt, umfassend mindestens eine Funktion, ausgewählt aus primären, sekundären oder tertiären Aminen, cyclisch oder nicht, Ethern, Silanolen, Alkoxysilanen, Thiolen, Ammonium, Iminen, Stannylgruppen, oder R eine substituierte aliphatische oder aromatische Kohlenwasserstoffgruppe, substituiert oder nicht, linear oder verzweigt, darstellt, und
- einem Imidazol mit der allgemeinen Formel (II) : 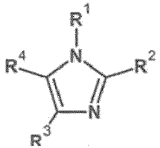 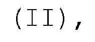 wobei:
- R¹ eine Kohlenwasserstoffgruppe oder ein Wasserstoffatom darstellt,
- R² eine Kohlenwasserstoffgruppe darstellt,
- R³ und R⁴ unabhängig voneinander ein Wasserstoffatom oder eine Kohlenwasserstoffgruppe darstellen,
- oder auch R³ und R⁴ gemeinsam mit den Kohlenstoffatomen des Imidazolrings, an die sie gebunden sind, einen Ring bilden,
- anschließend Kochen bei einer Temperatur von mehr als 120°C.

2. Verfahren nach Anspruch 1, **dadurch gekennzeichnet, dass** die Carbonsäure mit der allgemeinen Formel (I) eine natürliche oder synthetische Aminosäure, 4-Aminobenzoesäure, 4-Dimethylaminobenzoesäure, 2-Methylpyridin-4-carbonsäure, (S)-(+)-Pyrrolidin-3-carbonsäure, 2-{4-[Di-(2-chlorethyl)amino]phenyl}essig ist, oder die Carbonsäure mit der allgemeinen Formel (I) aus Tetrahydropyran-2-carbonsäure und Tetrahydrofuran-2-carbonsäure ausgewählt wird.

3. Verfahren nach Anspruch 1, **dadurch gekennzeichnet, dass** in der allgemeinen Formel (I) die Gruppe R eine Gruppe darstellt, ausgewählt aus:
- linearen und substituierten Alkylkohlenwasserstoffgruppen,
- verzweigten, substituierten oder nicht substituierten Alkylkohlenwasserstoffgruppen,
- Cycloalkylkohlenwasserstoffgruppen, verzweigt oder nicht, substituiert oder nicht substituiert,
- substituierten oder nicht substituierten Arylkohlenwasserstoffgruppen, und
- Aralkylgruppen, für welche die Alkylkette linear oder verzweigt, substituiert oder nicht substituiert ist, und die Arylgruppe substituiert oder nicht substituiert ist, und vorzugsweise R eine Gruppe darstellt, ausgewählt aus:
- verzweigten Alkylkohlenwasserstoffgruppen,
- Cycloalkylkohlenwasserstoffgruppen, verzweigt oder nicht,
- Arylkohlenwasserstoffgruppen, und
- Aralkylgruppen, für welche die Alkylkette linear oder verzweigt ist.

4. Verfahren nach Anspruch 1 oder 3,
**dadurch gekennzeichnet, dass** die Carbonsäure mit der allgemeinen Formel (I) Stearinsäure, Hydrozimtsäure, Fluoren-9-carbonsäure, Biphenyl-4-carbonsäure oder 1-Naphthoesäure ist, und vorzugsweise
die Carbonsäure mit der allgemeinen Formel (I) Hydrozimtsäure, Fluoren-9-carbonsäure, Biphenyl-4-carbonsäure oder 1-Naphthoesäure ist.

5. Verfahren nach einem der Ansprüche 1 bis 4, **dadurch gekennzeichnet, dass** die Carbonsäure mit der allgemeinen Formel (I) in einer Menge von 0,1 bis 100 Gewichtsteilen für 100 Gewichtsteile epoxidierten Naturkautschuk verwendet wird, vorzugsweise mindestens 0,5 Gewichtsteilen und höchstens 60 Gewichtsteilen, bevorzugter höchstens 40 Gewichtsteilen und noch mehr bevorzugt höchstens 20 Gewichtsteilen.

6. Verfahren nach einem der Ansprüche 1 bis 5, **dadurch gekennzeichnet, dass** in der allgemeinen Formel (II) R¹ eine Gruppe darstellt, ausgewählt aus Alkylgruppen mit 2 bis 12 Kohlenstoffatomen, oder Aralkylen mit 7 bis 13 Kohlenstoffatomen; wobei dies Gruppen sind, die gegebenenfalls substituiert sein können.

7. Verfahren nach einem der Ansprüche 1 bis 6, **dadurch gekennzeichnet, dass** in der allgemeinen Formel (II) R² eine Gruppe darstellt, ausgewählt aus Alkylgruppen mit 2 bis 12 Kohlenstoffatomen.

8. Verfahren nach einem der Ansprüche 1 bis 7, **dadurch gekennzeichnet, dass** in der allgemeinen Formel (II) R³ und R⁴ mit den Kohlenstoffatomen des Imidazolrings, an die sie gebunden sind, einen Phenyl-, Cyclohexen- oder Cyclopentenring bilden.

9. Verfahren nach einem der Ansprüche 1 bis 8, **dadurch gekennzeichnet, dass** das Imidazol mit der allgemeinen Formel (II) in einer Menge von 0,5 bis 4 Moläquivalenten, und vorzugsweise höchstens 3 Moläquivalenten, in Bezug auf die Carbonsäure mit der allgemeinen Formel (I) verwendet wird.

10. Verfahren nach einem der Ansprüche 1 bis 9, **dadurch gekennzeichnet, dass** der Epoxidierungsgrad des epoxidierten Naturkautschuks, der als Reagenz der Modifikationsreaktion verwendet wird, von 1 bis 50 Mol-% beträgt.

11. Epoxidierter und modifizierter Naturkautschuk, umfassend, statistisch im Elastomer verteilt, Einheiten der folgenden Kategorien A, B und C: 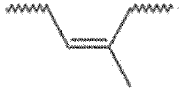
A) in einer Molfraktion von n %, 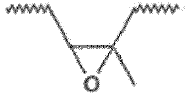
B) in einer Molfraktion von m %, 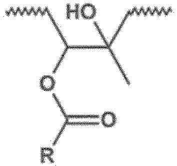
C) in einer Molfraktion von q %,
wobei die Molfraktion jeder Einheit durch das Verhältnis zur Gesamtheit des Elastomers definiert wird, d.h. m + n + q = 100, wobei
m, n und q Zahlen sind, die zum Intervall von 0 bis 100 gehören,
m + q von 1 bis 50, vorzugsweise mindestens 2, sogar mindestens 5, beträgt,
q von 0,05 bis 50, vorzugsweise mindestens 0,1 und höchstens 25, sogar höchstens 10, sogar höchstens 5, beträgt;
R eine Gruppe darstellt, umfassend mindestens eine Funktion, ausgewählt aus primären, sekundären oder tertiären Aminen, cyclisch oder nicht, Ethern, Silanolen, Alkoxysilanen, Thiolen, Ammonium, Iminen, Stannylgruppen, oder R eine substituierte aliphatische oder aromatische Kohlenwasserstoffgruppe, substituiert oder nicht, linear oder verzweigt, darstellt.

12. Epoxidierter und modifizierter Naturkautschuk nach Anspruch 11, **dadurch gekennzeichnet, dass** die Gruppe R der Einheit C von einer Säure stammt, ausgewählt aus einer natürlichen oder synthetischen Aminosäure, vorzugsweise 4-Aminobenzoesäure, 4-Dimethylaminobenzoesäure, 2-Methylpyridin-4-carbonsäure, (S)-(+)-Pyrrolidin-3-carbonsäure, 2-{4-[Di-(2-chlorethyl)amino]phenyl}essig, Tetrahydropyran-2-carbonsäure, Tetrahydrofuran-2-carbonsäure, Polyamid 6, Hydrozimtsäure, Fluoren-9-carbonsäure, Biphenyl-4-carbonsäure, 1-Naphthoesäure, und vorzugsweise die Gruppe R der Einheit C von Hydrozimtsäure stammt.

13. Kautschukzusammensetzung, basierend auf:
- mindestens einem epoxidierten und modifizierten Naturkautschuk, wie in Anspruch 11 oder 12 definiert, oder nach einem der Ansprüche 1 bis 10 erhalten, und
- einem oder mehreren verstärkenden Füllstoffen, und
- einem Vernetzungssystem.

14. Fertig- oder Halbfertigprodukt aus Kautschuk, **dadurch gekennzeichnet, dass** dieses eine Kautschukzusammensetzung, wie in Anspruch 13 definiert, umfasst.

15. Luftreifen, **dadurch gekennzeichnet, dass** dieser ein Fertig- oder Halbfertigprodukt, wie in Anspruch 14 definiert, umfasst.

## Claims

1. Process for modifying an epoxidized natural rubber comprising:
- reaction of an epoxidized natural rubber with a system consisting:
- of a carboxylic acid of general formula (I) 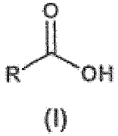 in which R represents a group comprising at least one function selected from cyclic or non-cyclic primary, secondary or tertiary amines, ethers, silanols, alkoxysilanes, thiols, ammoniums, imines or stannylated groups or R represents a linear or branched substituted aliphatic, or substituted or unsubstituted aromatic, hydrocarbon-based group, and
- of an imidazole of general formula (II) 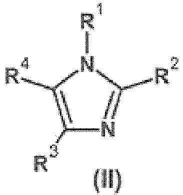 in which
- R¹ represents a hydrocarbon-based group or a hydrogen atom,
- R² represents a hydrocarbon-based group,
- R³ and R⁴ represent, independently of one another, a hydrogen atom or a hydrocarbon-based group,
- or else R³ and R⁴ represent, together with the carbon atoms of the imidazole ring to which they are attached, a ring,
- then curing at a temperature of greater than 120°C.

2. Process according to Claim 1, **characterized in that** the carboxylic acid of general formula (I) is a natural or synthetic amino acid, 4-aminobenzoic acid, 4-dimethylaminobenzoic acid, 2-methylpyridine-4-carboxylic acid, (S)-(+)-pyrrolidine-3-carboxylic acid, 2-{4-[di(2-chloroethyl)amino]phenyl}acetic or the carboxylic acid of general formula (I) is selected from tetrahydropyran-2-carboxylic acid and tetrahydrofuran-2-carboxylic acid.

3. Process according to Claim 1, **characterized in that**, in general formula (I), the group R represents a group selected from:
- linear and substituted hydrocarbon-based alkyl groups,
- branched substituted or unsubstituted hydrocarbon-based alkyl groups,
- branched or unbranched, substituted or unsubstituted hydrocarbon-based cycloalkyl groups,
- substituted or unsubstituted hydrocarbon-based aryl groups, and
- aralkyl groups for which the alkyl chain is linear or branched, substituted or unsubstituted, and the aryl group is substituted or unsubstituted, and preferably R represents a group selected from:
- branched hydrocarbon-based alkyl groups,
- branched or unbranched hydrocarbon-based cycloalkyl groups,
- hydrocarbon-based aryl groups, and
- aralkyl groups for which the alkyl chain is linear or branched.

4. Process according to Claim 1 or 3, **characterized in that** the carboxylic acid of general formula (I) is stearic acid, hydroxycinnamic acid, fluorene-9-carboxylic acid, biphenyl-4-carboxylic acid or 1-naphthoic acid, and preferably
the carboxylic acid of general formula (I) is hydroxycinnamic acid, fluorene-9-carboxylic acid, biphenyl-4-carboxylic acid or 1-naphthoic acid.

5. Process according to any one of Claims 1 to 4, **characterized in that** the carboxylic acid of general formula (I) is used according to an amount ranging from 0.1 to 100 parts by weight per hundred parts by weight of epoxidized natural rubber, preferably at least from 0.5 parts by weight and at most 60 parts by weight, more preferentially at most 40 parts by weight and more preferentially still at most 20 parts by weight.

6. Process according to any one of Claims 1 to 5, **characterized in that**, in general formula (II), R¹ represents a group selected from alkyl groups having from 2 to 12 carbon atoms or aralkyl groups having from 7 to 13 carbon atoms; which groups may optionally be substituted.

7. Process according to any one of Claims 1 to 6, **characterized in that**, in general formula (II), R² represents a group selected from alkyl groups having from 2 to 12 carbon atoms.

8. Process according to any one of Claims 1 to 7, **characterized in that**, in general formula (II), R³ and R⁴ form, with the carbon atoms of the imidazole ring to which they are attached, a phenyl, cyclohexene or cyclopentene ring.

9. Process according to any one of Claims 1 to 8, **characterized in that** the imidazole of general formula (II) is used at an amount ranging from 0.5 to 4 molar equivalents, and preferably at most 3 molar equivalents relative to the carboxylic acid of general formula (I).

10. Process according to any one of Claims 1 to 9, **characterized in that** the degree of epoxidation of the epoxidized natural rubber used as reagent in the modification reaction ranges from 1 to 50 mol%.

11. Modified epoxidized natural rubber comprising, distributed randomly within the elastomer, units of the following categories A, B and C:
A) 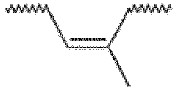 according to a molar fraction of n%
B) 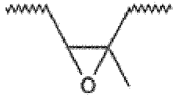 according to a molar fraction of m%
C) 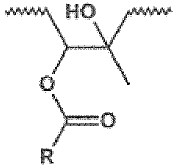 according to a molar fraction of q%,
the molar fraction of each unit being defined relative to the entirety of the elastomer, i.e. m+n+q = 100, where
m, n and q are numbers belonging to the range extending from 0 to 100,
m+q is equal to 1 to 50, preferably at least 2 or even at least 5;
q is equal to from 0.05 to 50, preferably at least 0.1 and at most 25, or even at most 10, or even at most 5;
R represents a group comprising at least one function selected from cyclic or non-cyclic primary, secondary or tertiary amines, ethers, silanols, alkoxysilanes, thiols, ammoniums, imines or stannylated groups or R represents a linear or branched substituted aliphatic, or substituted or unsubstituted aromatic, hydrocarbon-based group.

12. Modified epoxidized natural rubber according to Claim 11, **characterized in that** the group R of the unit C originates from an acid selected from a natural or synthetic amino acid, preferably 4-aminobenzoic acid, 4-dimethylaminobenzoic acid, 2-methylpyridine-4-carboxylic acid, (S)-(+)-pyrrolidine-3-carboxylic acid, 2-{4-[di(2-chloroethyl)amino]phenyl}acetic, tetrahydropyran-2-carboxylic acid, tetrahydrofuran-2-carboxylic acid, polyamide 6, hydroxycinnamic acid, fluorene-9-carboxylic acid, biphenyl-4-carboxylic acid or 1-naphthoic acid, and preferably the group R of the unit C originates from hydroxycinnamic acid.

13. Rubber composition based
- on at least one modified epoxidized natural rubber as defined in Claim 11 or 12 or obtained according to any one of Claims 1 to 10, and
- on one or more reinforcing fillers, and
- on a crosslinking system.

14. Finished or semi-finished rubber product, **characterized in that** it comprises a rubber composition as defined in Claim 13.

15. Tyre, **characterized in that** it comprises a finished or semi-finished product as defined in Claim 14.
